# EUROPEAN PATENT SPECIFICATION

(11) **EP 3 156 604 B1**
(45) Date of publication and mention of the grant of the patent: **14.09.2022**
(21) Application number: 15830395.8
(22) Date of filing: 29.06.2015
(51) Int. Cl.: F01D 9/04, F01D 9/02, F01D 11/00, F02C 7/00

(54) **STATOR VANE ARRANGEMENT AND ASSOCIATED METHOD**
LEITSCHAUFELANORDNUNG UND ZUGEHÖRIGES VERFAHREN
ENSEMBLE DE PALE DE STATOR ET MÉTHODE ASSOCIÉE

(30) Priority: 04.08.2014 JP 2014158828
(43) Date of publication of application: 19.04.2017
(73) Proprietor: Mitsubishi Power, Ltd., Yokohama 220-8401 (JP)
(72) Inventor: TAKAMURA Keita, Yokohama-shi Kanagawa 220-8401 (JP)
(74) Representative: Henkel & Partner mbB
(86) International application number: PCT/JP2015/068623
(87) International publication number: WO 2016/021330

(56) References cited:
- WO-A1-2014/069286
- FR-A1- 2 961 850
- GB-A- 2 462 268
- JP-A- H1 113 406
- JP-A- 2007 154 889
- JP-A- 2010 065 698
- US-A1- 2007 122 275
- US-A1- 2014 119 902

## Description

### TECHNICAL FIELD

The present invention relates to a vane arrangement comprising a vane and a support member and to a remodeling method for a vane.

### DESCRIPTION OF THE RELATED ART

A gas turbine vane is known that has shrouds formed on a radially inward side and a radially outward side of the airfoil section. The outer shroud located on the radially outward side is provided with a hook on the outer side. The outer shroud is usually supported by an insulation ring or a casing through the hook.

Of the vane thus constructed, the airfoil section is arranged in a gas path through which a high-temperature working fluid flows. Cooling air flows on the side of the shroud of the vane opposite from the gas path. The outer shroud tries to deform so as to warp toward the radially outward side due to a large temperature difference between the high-temperature working fluid inside the gas path and the cooling air.

The hook provided on the shroud protrudes to a large extent in the radial direction of the shroud. Thus, the hook has a high moment of inertia of area relative to the warping deformation of the shroud. As a result, the hook restricts the deformation of the shroud body, causing high heat stress on the shroud.

JP 4 781 244 B shows a turbine vane in which a hook does not continuously extend in a circumferential direction, but instead a recessed part having a shape of scallop is formed in order to relax mechanical stress and heat stress. Patent Document 1 further discloses a sealing assembly having a sealing member which is arranged so as to at least partially overlap the recessed part to prevent a fluid from leaking through the recessed part.

GB 2462268 A discloses a vane with an airfoil section extending, in an intended mounting arrangement in a vane stage in which plural vanes are aligned in a circumferential direction, in a radial direction and an outer shroud located on the radially outward side of the airfoil section. The outer shroud is provided with a hook section provided on the radially outward side of the shroud body so as to protrude from the radial outward side and so as to extend in the circumferential direction and provided with an engaging part protruding in the axial direction from the hook body. The hook section is provided with recessed parts identified as "scalloped areas" in the circumferential direction. The scalloped areas are resealed by means of a seal block and a seal strip.

US 2007/ 0 122 275 A1 discloses a turbine nozzle segment for use in a gas turbine engine, the turbine nozzle segment comprising a plurality of circumferentially spaced apart airfoil vanes and radially inner and outer bands or platforms integrally connecting the airfoil vanes.

US 2014/0 119 902 A1 discloses a seal carrier attachment for a turbomachine. The seal carrier attachment includes a seal carrier ring that is inserted and engages with a receptacle which is provided with a U-shaped design and is open radially to the inside.

FR 2961850 A discloses a vane with an airfoil section that is intended to be received in a support member of a gas turbine. A resist part in a flange of the outer shroud is formed to hold a thermal insulation pad having a thickness greater than the depth of a recessed part so that the thermal insulating pad protrudes beyond the upper surface of the shroud body and a space or gap is formed between the flanges and the casing to prevent heat conduction from the shroud of the vane to the casing by means of the thermal insulating pad.

WO 2014/069286 A1 discloses a structure for securing a turbine nozzle formed from a plurality of nozzle segments that are disposed annularly around an axis of a jet engine in a casing of a turbine. In this structure each nozzle segment is provided with an arc-shaped outer band which couples respective leading ends of the plurality of stationary blades to each other, and the turbine nozzle body is secured between the turbine case and the shroud by engaging an engagement portion of the outer band with a receiving portion of the turbine case from behind, fitting a recessed portion of the outer band to a rotation stopper from behind, and fitting a cutout portion formed in the shroud to a protruding portion formed at the back side of the recessed portion from behind. A sealing surface on the radially outer circumferential surface of a flange on the outer band is discontinuous at the location of the recessed portion but the protruding portion on the rear side and conforming to the recessed portion avoids that the stiffness of the flange is reduced.

### SUMMARY OF THE INVENTION

### PROBLEMS THE INVENTION IS TO SOLVE

If the recessed part is formed in the hook in order to relax the stress and the sealing assembly is disposed so as to cover the recessed part as disclosed in JP 4 781 244 B, cooling air is capable of leaking through gaps between parts around the recessed part. Therefore, the cooling air flowing into the gas path increases, which may degrade the performances of the gas turbine.

An object of the present invention is to provide a vane arrangement comprising a vane and a support member and a remodeling method for a vane for such arrangement which can reduce heat stress and also restrict an increase in amount of air leakage.

### SOLUTION TO PROBLEM

According to the present invention, a vane arrangement with the features of claim 1 is provided.

The vane thus constructed is capable of reducing the stiffness of the hook section by the recessed part. Therefore, the hook section is capable of deforming following a deformation of the shroud body due to heating. The hook section has the recessed part recessed in the axial direction or the radial direction, and yet the sealing surface is not split by the recessed part in the circumferential direction. As a result, it is possible to limit an increase in the amount of air leakage and relax heat stress.

According to a preferred aspect of the present invention, the hook section of the vane may have a front hook arranged on the upstream side in the axial direction. The engaging part of the front hook may have a sealing surface on the radially inward side.

The recessed part of the vane thus constructed is capable of reducing the stiffness of the front hook having the sealing surface on the radially inward side without splitting the sealing surface. As a result, it is possible to limit an increase the amount of air leakage and relax the heat stress acting on the front hook side of the shroud body.

According to a preferred aspect of the present invention, in the vane, an area in the circumferential direction, in which the recessed part is arranged, may include a position in the circumferential direction at which a leading edge of the airfoil section is arranged.

The vane thus constructed is capable of relaxing stress at a highly stressed area in the leading edge.

According to the present invention, the hook section of the vane according to the present invention includes a rear hook arranged on the downstream side in the axial direction. The engaging part of the rear hook includes the sealing surface on the radially outer circumferential side.

The recessed part of the hook section thus constructed is capable of relaxing the stress acting on the rear hook side of the shroud body by reducing the stiffness of the rear hook having the sealing surface on the radially outer circumferential side.

According to a preferred aspect of the present invention, in the vane, an area in the circumferential direction, in which the recessed part is formed, may include a position in the circumferential direction at which a trailing edge of the airfoil section is arranged.

The vane thus constructed is capable of relaxing stress at a highly stressed area in the trailing edge of the airfoil section.

According to a preferred aspect of the present invention, in the vane, an area in the circumferential direction, in which the recessed part is formed, may include the center in the circumferential direction of the hook section.

The vane thus constructed is capable of effectively reducing the stiffness of the hook section relative to a bending deformation of the shroud.

According to the present invention, a remodeling method with the features of claim 6 is provided.

The method is capable of forming a recessed part in an existing vane, while the turbine is being maintained, so as to reduce the amount of air leakage and to relax heat stress.

The above-described vane arrangement comprising a vane and a support member and remodeling method for a vane are capable of limiting an increase in amount of air leakage and of relaxing heat stress.

### BRIEF DESCRIPTION OF THE DRAWINGS

FIG. 1 is a sectional view showing an outline of a gas turbine in a first embodiment of the present invention.
FIG. 2 is a sectional view of a major section of the gas turbine in the first embodiment of the present invention.
FIG. 3 is a perspective view of a vane segment in the first embodiment of the present invention.
FIG. 4 is a sectional view of an outer shroud in the first embodiment of the present invention.
FIG. 5 is a view of a recessed part from a radially outward-side point of view in the first embodiment of the present invention.
FIG. 6 is a view of the recessed part from an axially upstream-side point of view in the first embodiment of the present invention.
FIG. 7 is a flow chart showing a remodeling method for a vane in the first embodiment of the present invention.
FIG. 8 is a sectional view of an outer shroud in a second embodiment of the present invention corresponding to the section as shown in FIG. 4.
FIG. 9 is a sectional view of a rear hook in a first variation of the embodiments of the present invention.
FIG. 10 is a sectional view of a front hook in a second variation of the embodiments of the present invention.
FIG. 11 is a perspective view of an outer shroud in a third variation of the embodiments of the present invention.
FIG. 12 is a perspective view of an outer shroud in a fourth variation of the embodiments of the present invention.
FIG.13 is an expanded perspective view of a part around a rear hook in a fifth variation of the present disclosure.
FIG. 14 is an expanded perspective view of an area around a rear hook in a sixth variation of the embodiments of the present invention.
FIG. 15 is a view, from a radially outward side, of an outer shroud in a seventh variation of the embodiments of the present invention.
FIG. 16 is a view, from a radially outward side, of an outer shroud in an eighth variation of the embodiments of the present invention.
FIG. 17 is a view, from a radially outward side, of the outer shroud in the first embodiment of the present invention.
FIG. 18 is an expanded perspective view, corresponding to FIG. 13, of an area around a rear hook in a tenth variation of the embodiments of the present invention.
FIG. 19 is a perspective view of a ring segment in an eleventh variation of the embodiments of the present invention.

### DESCRIPTION OF EMBODIMENTS

### First Embodiment

Hereinafter, a vane, a gas turbine, a ring segment, a remodeling method for a vane, and a remodeling method for a ring segment according to a first embodiment of the present invention will be described.

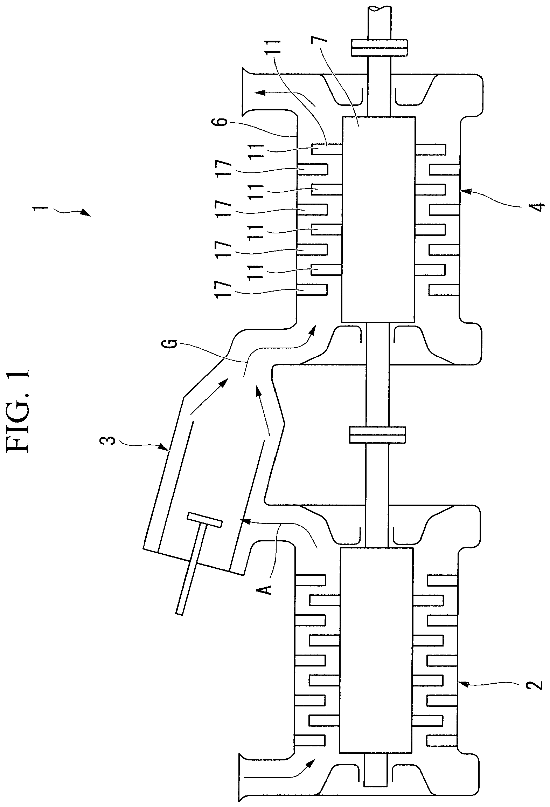

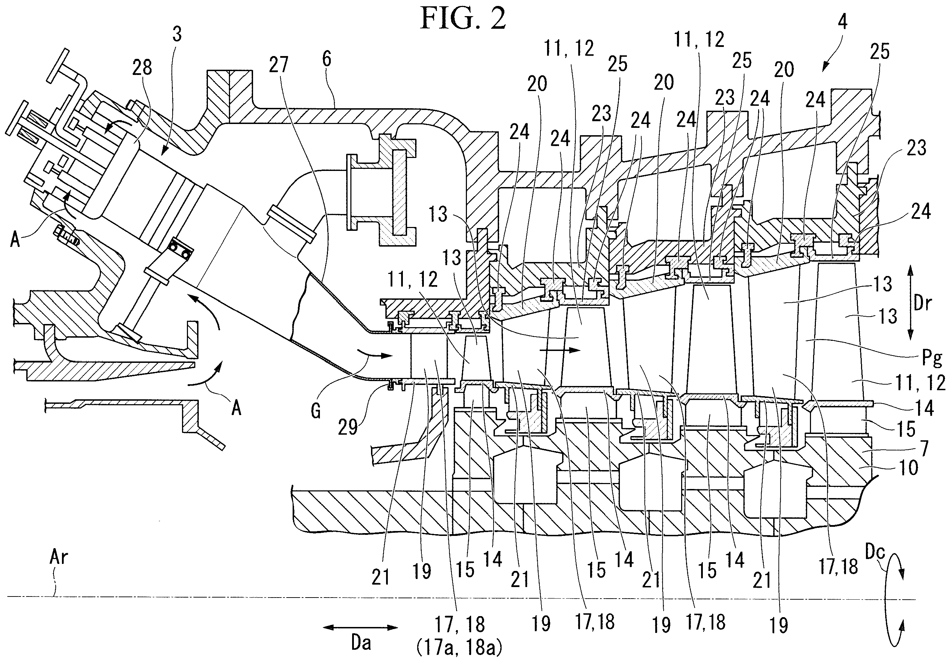

FIG. 1 is a sectional view showing an outline of the gas turbine in the first embodiment of the present invention. FIG. 2 is a sectional view of a major section of the gas turbine in the first embodiment of the present invention.

As indicated in FIG. 1, the gas turbine 1 in the first embodiment is provided with a compressor 2, a combustor 3, and a turbine section 4.

The compressor 2 draws in air through an air inlet and compresses it into compressed air.

The combustor 3 is connected with an outlet of the compressor 2. The combustor 3 injects fuel to the compressed air exhausted from the compressor 2 and generates combustion gas G having a high temperature and high pressure.

The turbine section 4 is provided with a casing 6 and a rotor 7.

The casing 6 has a form of cylinder around a rotor axis Ar (shown in FIG. 2).

The rotor 7 is supported by the casing 6 so as to be rotatable around the rotor axis Ar.

The turbine section 4 drives the rotor 7 to rotate by using the combustion gas G sent from the combustor 3 as a working fluid. The driving force thus generated in the turbine section 4 is transferred to a generator (not shown in the figures) coupled to the rotor 7. In the following description, "upstream side" means the side of the rotor axis Ar of the turbine section 4 which is toward the compressor 2, and "downstream side" means the other side of the rotor axis Ar opposite to the upstream side. Further, "axial direction Da" means a direction in which the rotor axis Ar extends, "circumferential direction Dc" means a direction of the circumference of the rotor axis Ar, and "radial direction Dr" means a direction radial to the rotor axis Ar. Further, "radially inward" means one side approaching the rotor axis Ar in the radial direction Dr, and "radially outward" means the other side leaving from the rotor axis Ar.

As indicated in FIG. 2, the rotor 7 is provided with a rotor body 10 and a plurality of blade stages 11. The rotor 7 extends in the axial direction Da around the rotor axis Ar. The blade stages 11 are aligned in the axial direction Da and mounted on the rotor body 10. Each of the blade stages 11 is provided with a plurality of blades 12. The plurality of blades 12 are aligned in the circumferential direction D relative to the rotor axis Ar and mounted around the rotor axis Ar.

The blade 12 is provided with a blade body 13, a platform 14 and a blade root 15. The blade body 13 extends in the radial direction Dr. The platform 14 is provided on the radially inward side of the blade body 13. The blade root 15 is provided on the radially inward side of the platform 14. The blade 12 is fixed to the rotor body 10 by inserting the blade root 15 to the rotor body 10.

A vane stage 17 is arranged on the upstream side of each of the plurality of blade stages 11. Each of the vane stages 17 is provided with a plurality of vanes 18. The plurality of vanes 18 are aligned in the circumferential direction Dc. The vane 18 is provided with a vane body (airfoil section) 19, an outer shroud 20, and an inner shroud 21. The vane body 19 extends in the radial direction Dr. The outer shroud 20 is provided on the radially outward side of the vane body 19. The inner shroud 21 is provided on the radially inward side of the vane body 19.

A blade ring 23 is arranged on the radially outward side of the blade stage 11 and the vane stage 17 and radially inward side of the casing 6. The blade ring 23 has a cylindrical form around the rotor axis Ar. The blade ring 23 is fixed to the casing 6. The blade ring 23 is connected to the outer shroud 20 of the vane 18 by an insulation ring 24 serving as a vane support member.

A ring segment 25 is arranged between the outer shrouds 20 next to each other in the axial direction Da. The plurality of ring segments 25 are aligned in the circumferential direction Dc around the rotor axis Ar. The plurality of ring segments 25 aligned in the circumferential direction Dc form an annular shape. The blade stage 11 is arranged on the radially inward side of the ring segments 25. All the plurality of ring segments 25 aligned in the circumferential direction Dc are connected to the blade ring 23 by the insulation ring 24.

The combustor 3 has a transition piece 27 and a fuel supplier 28. The transition piece 27 sends the high-pressure and high-temperature combustion gas G to the turbine section 4. The fuel supplier 28 supplies fuel and compressed air to the transition piece 27. An outlet flange 29 on the downstream side of the transition piece 27 is connected with the inner shroud 21 and the outer shroud 20 of vanes 18a composing a first vane stage 17a.

The compressed air A flows from the compressor 2 into the casing 6 of the turbine section 4 and further flows into the fuel supplier 28 of the combustor 3 through the circumferential area of the combustor 3. The fuel supplier 28 supplies the fuel from the outside to the transition piece 27 together with the compressed air A. The fuel is burned in the transition piece 27 to generate the combustion gas G. The combustion gas G passes between the inner shrouds 21 and the outer shrouds 20 of the plurality of vanes 18 composing the vane stages 17, and between the platforms 14 of the plurality of blades 12 composing the blade stage 11 located on the downstream side of the vane stage 17, and the ring segments 25 arranged on the radially outward side of the blades 12. The combustion gas G rotates the rotor 7 around the rotor axis Ar by contacting the blade body 13 in the above passing process.

An annular combustion gas passage Pg through which the combustion gas G flows is delimited by the outer shroud 20 and the inner shroud 21 of the vane 18, the platform 14 of the blade 12, and the ring segment 25 facing the platform 14. The vane 18, the blade 12, and the ring segment 25 contact the combustion gas G having high temperature and high pressure, and therefore, work as hot parts.

A part of the above compressed air A or compressed air A bled from the compressor 2 flows into an area on the radially outward side of the outer shroud 20 and an area on the radially inward side of the inner shroud 21 so as to cool the outer shroud 20 and the inner shroud 21 of the vane 18. A part of the above compressed air A flowing into the casing 6 from the compressor 2 or the compressed air A bled from the compressor 2 is also supplied to an area on the radially inward side of the casing 6 and radially outward side of the blade ring 23. The compressed air A flows into the radially outward side of the ring segment 25 through the blade ring 23 so as to cool the ring segment 25 arranged on the radially inward side of the blade ring 23.

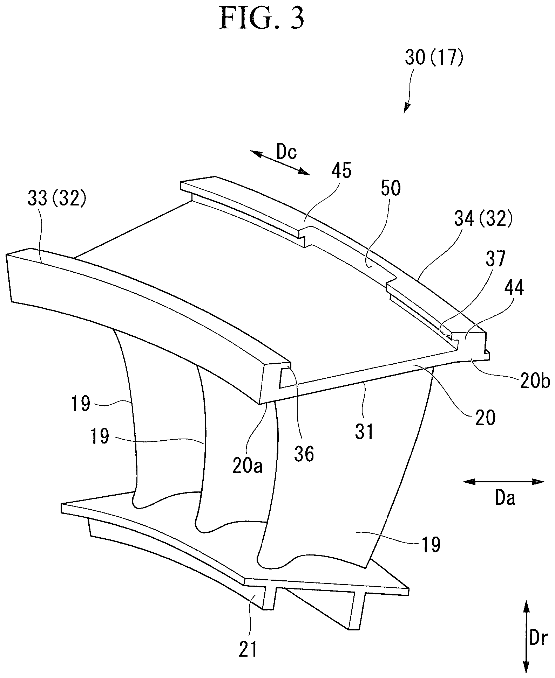

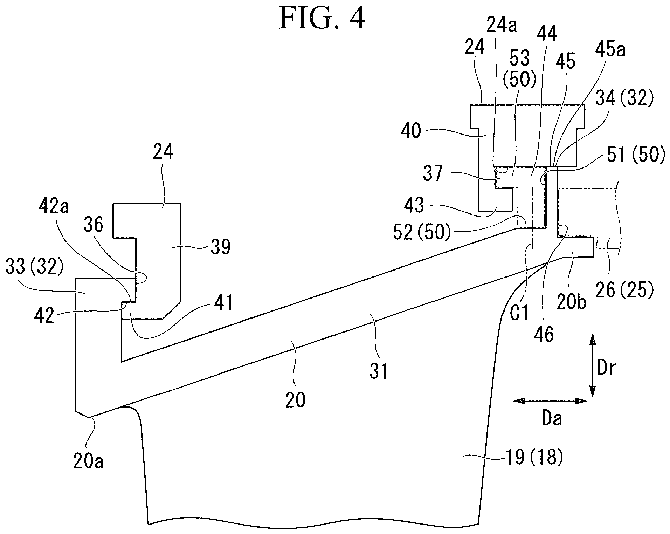

FIG. 3 is a perspective view of a vane segment in the first embodiment of the present invention. FIG. 4 is a sectional view, from the circumferential direction, of a part around the outer shroud 20 in the first embodiment of the present invention.

As indicated in FIG. 3, the vane stage 17 has a plurality of vane segments 30. The vane stage 17 has the plurality of vane segments 30 aligned in the circumferential direction Dc and connected to each other so as to form an annular shape. The vane segment 30 in the first embodiment has three vane bodies 19, the outer shroud 20, and the inner shroud 21. These vane bodies 19, outer shroud 20, and inner shroud 21 are formed integrally.

The outer shroud 20 has a shroud body 31 and a hook section 32.

The shroud body 31 extends in the axial direction Da and the circumferential direction Dc. The shroud body 31 has a shape of board curving in the circumferential direction Dc. The shroud body 31 has the vane bodies 19 extending from the inner circumferential surface of the shroud body 31 to the radially inward side.

The hook section 32 is formed so as to engage the vane segment 30 with the insulation ring 24. The hook section 32 has a front hook 33 and a rear hook 34.

As indicated in FIGS. 3 and 4, the front hook 33 is arranged on the upstream side nearby a peripheral end 20a of the outer shroud 20 in the axial direction Da. The front hook 33 in the first embodiment is arranged at the peripheral end 20a on the upstream side of the outer shroud 20. The front hook 33 protrudes to the radially outward side from the shroud body 31 of the outer shroud 20. The front hook 33 is formed continuously over the entire width of the outer shroud 20 in the circumferential direction Dc.

The front hook 33 has a protrusion 36 protruding to the downstream side in the axial direction Da. The protrusion 36 protrudes from a radially outer end of the front hook 33.

The rear hook 34 is arranged on the downstream side in the axial direction Da nearby a peripheral end 20b of the outer shroud 20. The rear hook 34 in the first embodiment is arranged at the peripheral end 20b on the downstream side of the outer shroud 20. The rear hook 34, like the front hook 33, protrudes to the radially outward side from the shroud body 31 of the outer shroud 20. The rear hook 34 is formed continuously over the entire width of the outer shroud 20 in the circumferential direction Dc. The rear hook 34 has a protrusion 37 protruding toward the upstream side in the axial direction Da.

As indicated in FIG. 4, the insulation ring 24 has a front engaging part 39 to engage with the front hook 33. The engaging part 39 extends toward the radially inward side so as to be located next to the downstream side of the front hook 33. The front engaging part 39 has a supporting section 41. The supporting section 41 supports the protrusion 36 in the front hook 33 from the radially inward side. The supporting section 41 extends from the downstream side to the upstream side in the axial direction Da. The supporting section 41 is formed continuously in the circumferential direction Dc in the same way as the front hook 33.

Since the vane 18 is pressed by the combustion gas G flowing from the upstream to the downstream, a force trying to shift the front hook 33 to the radially inward side acts on the front hook 33. As a result, a radially inward face of the protrusion 36 in the front hook 33 is pressed against a radially outward face of the supporting section 41 in the insulation ring 24. By this action, a gap 42a between the radially inward face of the protrusion 36 and the radially outward face of the supporting section 41 narrows.

The cross-sectional area of the gap 42a is the narrowest in a passage between the insulation ring 24 and the front hook 33 through which cooling air leaks to the combustion gas passage Pg (shown in FIG. 2). In other words, the face of the protrusion 36 of the front hook 33 directed radially inward serves as a sealing surface 42 which continues in the circumferential direction Dc.

The insulation ring 24 has a rear engaging part 40 which engages with the rear hook 34. The rear engaging part 40 extends to the radially inward side so as to be located next to the upstream side of the rear hook 34. The rear engaging part 40 has a supporting section 43 supporting the protrusion 37 of the rear hook 34 from the radially inward side. The supporting section 43 extends from the upstream side to the downstream side in the axial direction Da. The supporting section 43 is formed continuously in the circumferential direction Dc in the same way as the rear hook 34.

When the combustion gas G flowing from the upstream to the downstream presses the vane 18, a force trying to shift the rear hook 34 toward the radially outward side acts on the rear hook 34. By the action of the force, a radially outward face of the protrusion 37 in the rear hook 34 is pressed against a surface of a radially inward face 24a of the insulation ring 24. By this action, a gap 45a between the radially outward face of the protrusion 37 and the radially inward face 24a of the insulation ring 24 narrows. The cross-sectional area of the gap 45a is the narrowest in a passage between the insulation ring 24 and the rear hook 34 through which cooling air leaks to the combustion gas passage Pg (shown in FIG. 2). In other words, the face of the rear hook 34 directed radially outward serves as a sealing surface 45 continuing in the circumferential direction Dc.

The rear hook 34 has the sealing surface 45 that is the face directed to the radially outward side, i.e., both of the face directed to the radially outward side of a hook body 44 which rises toward the radially outward side, and the face directed to the radially outward side of the protrusion 37. In the first embodiment, the face directed toward the radially outward side of the hook body 44 and the face directed toward the radially outward side of the protrusion 37 form the unitary sealing surface 45 which continues in the circumferential direction Dc.

Each of the sealing surfaces 42, 45 limits leakage of the cooling air, which is supplied to the radially outward side of the outer shroud 20, to the combustion gas passage Pg on the radially inward side of the outer shroud 20.

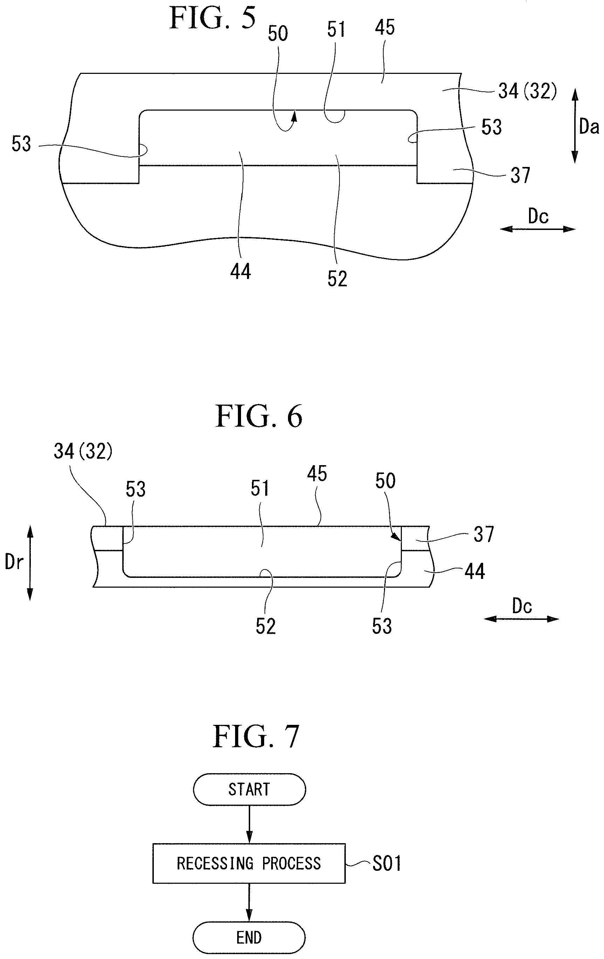

FIG. 5 is a view of a recessed part from a radially outward-side point of view in the first embodiment of the present invention. FIG. 6 is a view of the recessed part from an axially upstream-side point of view in the first embodiment of the present invention.

As indicated in FIG. 3 to FIG. 6, the rear hook 34 has a recessed part 50. The recessed part 50 is formed in at least a part of the rear hook 34 in the circumferential direction Dc. The sealing surface 45 is formed on a face of the rear hook 34 directed to the radially outward side. The recessed part 50 is formed by removing a part of the sealing surface 45. However, the sealing surface 45 is formed continuously in the circumferential direction Dc over the entire width of the rear hook 34 including a downstream part of the recessed part 50 in the axial direction Da.

The recessed part 50 in the first embodiment is formed in a central part in the circumferential direction Dc of the vane segment 30. In other words, the recessed part 50 is formed in a part including the center in the circumferential direction Dc of the hook section 32. The recessed part 50 in the first embodiment is formed in the rear hook 34 so as to be recessed from the upstream side to the downstream side in the axial direction Da. More specifically, when seen along the axial direction Da, the recessed part 50 extends from the side of the protrusion 37 to the hook body 44 and is recessed to such an extent as not to penetrate to the downstream side of the hook body 44 in the axial direction Da. A face 51 of the recessed part 50 directed to the upstream side is located between a central part C1 (shown in FIG. 4) of the hook body 44 and a second protrusion 38 in the axial direction Da.

The recessed part 50 has the face 51 directed to the upstream side, a face 52 directed to the radially outward side, and faces 53 located on both sides of the recessed part 50 in the circumferential direction Dc. The face 51 directed to the upstream side extends in the radial direction Dr and also in the circumferential direction Dc. The face 52 directed to the radially outward side extends in the axial direction Da and also in the circumferential direction Dc. The faces 53 directed to both sides in the circumferential direction Dc extend in the radial direction Dr and also in the axial direction Da. Corners where the face 51 directed to the upstream side, the face 52 directed to the radially outward side, and the faces 53 arranged on both sides in the circumferential direction Dc are connected to one another have a curved surface.

Next, a remodeling method for the vane 18 in the gas turbine 1 of the first embodiment will be described with reference to the figures. The method of the first embodiment is a remodeling method for a gas turbine which is an existing gas turbine. A remodeling method for the ring segment 25 described later is similar to the following remodeling method for the vane. Therefore, a specific description of the remodeling method for the ring segment 25 will be omitted.

FIG. 7 is a flow chart of the remodeling method for a vane in the first embodiment of the present invention.

Firstly, as a preparing process, the vane 18 is removed from the insulation ring 24.

Secondly, as indicated in FIG. 7, a working process, for instance a cutting work process, is performed on the hook section 32 of the vane 18 to form the recessed part 50 (step S01; recessed part forming process).

Next, as a finishing process, the vane 18 is assembled to the insulation ring 24 in reversed processing order of removing the hook section 32 from the insulation ring 24. The remodeling method for the vane 18 is completed by the above processing.

In the first embodiment, the stiffness of the rear hook 34 in the hook section 32 can be reduced by the recessed part 50. Therefore, the rear hook 34 can deform following a deformation of the shroud body 31 by heating. The hook section 32 has the recessed part 50 recessed in the axial direction or the radial direction, and yet the sealing surface 45 of the protrusion 37 is not split by the recessed part 50 in the circumferential direction Dc. Thus, the vane in the first embodiment can limit an increase in the amount of air leakage and extend the lifetime of the vane 18 by relaxing the heat stress acting on the vane 18.

Further, since the vanes 18 comprise the plurality of vane segments 30, the recessed part 50 can be easily formed at each of the plurality of vane segments 30. As a result, the stiffness of the rear hook 34 can be easily reduced.

Further, the vane in the first embodiment can limit the heat stress on the shroud body 31 while limiting an increase in the amount of air leakage. Therefore, the performance and the reliability of the gas turbine can be improved.

### Second Embodiment

Next, a vane in a second embodiment of the present invention will be described. The vane of the second embodiment has a further recessed part in the front hook 33 of the vane in the first embodiment. Therefore, the same reference numbers are used for the components of the following second embodiment which are equivalent to those of the first embodiment, and repeated description for the equivalent components are omitted.

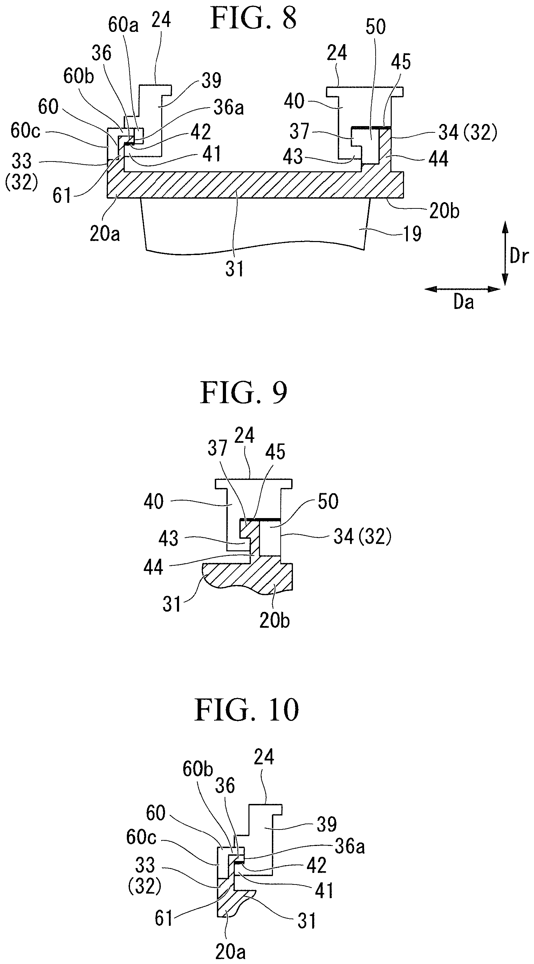

FIG. 8 is a sectional view of an outer shroud in the second embodiment of the present invention corresponding to the section as shown in FIG. 4. As indicated in FIG. 8, the front hook 33 is provided on the upstream side in the axial direction Da nearby the peripheral end 20a of the outer shroud 20. The front hook 33 has the protrusion 36 protruding to the downstream side in the axial direction Da. The sealing surface 45 (indicated by a bold line in FIG. 8) in the rear hook 34 is directed to the radially outward side. The protrusion 36 of the front hook 33 has the sealing surface 42 (indicated by a bold line in FIG. 8) which is the face on the radially inward side so as to seal a gap between the insulation ring 24 and the front hook 33.

The front hook 33 has a recessed part 60. The recessed part 60 is formed in at least a part of the front hook 33 in the circumferential direction Dc. The recessed part 60 has the sealing surface 42 over at least a part thereof in the axial direction Da. The recessed part 60 is formed in the front hook 33 so as to be recessed in the axial direction Da.

More specifically, the recessed part 60 has a shape curved from a part 60a on the downstream side of the sealing surface 42 in the protrusion 36 in the axial direction Da, via a part 60b on the radially outward side of the hook body 61, to a part 60c on the upstream side of the hook body 61 in the axial direction Da. In other words, the recessed part 60 is arranged in the axial direction Da relative to the sealing surface 42 at the part 60a on the downstream side of the sealing surface 42 in the axial direction Da and also at the part 60c on the upstream side of the hook body 61 in the axial direction Da. The part 60c on the upstream side of the recessed part 60 is located further upstream in the axial direction Da than an end face 36a of the protrusion 36 across the sealing surface 42.

According to the second embodiment, the stiffness of the front hook 33 can be reduced by the recessed part 60. Thus, the recessed part 60 is capable of reducing the heat stress on the upstream side in the axial direction Da of the shroud body 31.

Since the sealing surface 42 is formed continuously in the circumferential direction Dc over the entire width of the front hook 33 , the performance of sealing between the front engaging part 39 and the front hook 33 is secured. As a result, reduction of the stiffness of the front hook 33 thus performed does not cause an increase in the amount of air leakage.

The recessed parts 60 formed on both of the upstream side and the downstream side of the sealing surface 42 in the axial direction Da are capable of sufficiently reducing the stiffness of the front hook 33. As a result, the heat stress acting on the upstream side in the axial direction Da of the shroud body 31 can be sufficiently reduced.

### First Variation

FIG. 9 is a sectional view of a rear hook in a first variation of the embodiments of the present invention.

In the above embodiments, an example of forming the recessed part 50 on the upstream side in the axial direction Da of the sealing surface 45 in the rear hook 34 has been described. However, the sealing surface 45 can be arranged in various areas in the axial direction Da relative to the recessed part 50. For instance, as indicated in FIG. 9, the recessed part 50 can be formed on the downstream side in the axial direction Da of the sealing surface 45.

### Second Variation

FIG. 10 is a sectional view of a front hook in a second variation of the embodiments of the present invention.

In the above second embodiment, an example of forming the recessed part 60 on the upstream side and also on the downstream side in the axial direction Da of the sealing surface 42 in the front hook 33 has been described. Alternatively, however, the recessed part 60 can be formed on one of the upstream side and the downstream side of the sealing surface 42. For instance, as indicated in FIG. 10, a recessed part 60 may be formed so as to extend from a part 60b on the radially outward side of a hook body 61 to a part 60c on the upstream side in the axial direction Da of the hook body 61. In other words, the part 60a on the downstream side in the axial direction Da of the sealing surface 42 can be omitted.

### Third Variation

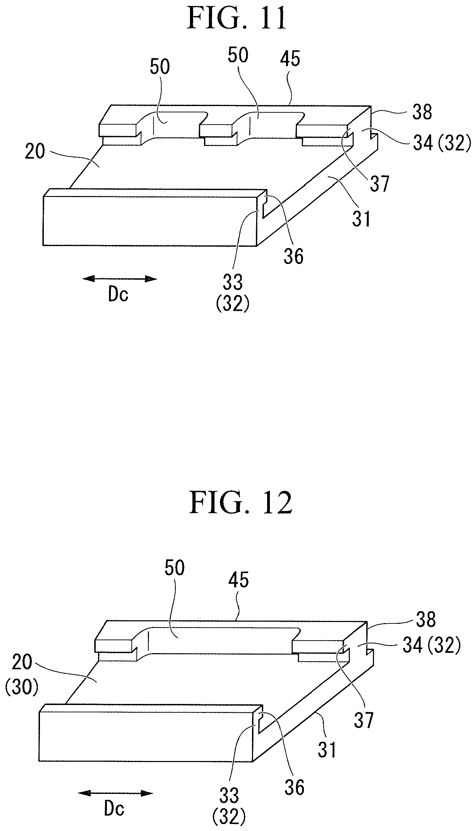

FIG. 11 is a perspective view of an outer shroud in a third variation of the embodiments of the present invention. FIG. 11 shows only the outer shroud 20 in a simplified form.

The outer shroud 20 of the vane segment 30 in each of the first and second embodiments has only one recessed part 50 at the central part in the circumference direction Dc. However, the number and location of the recessed part 50 is not limited to those in the first and second embodiments. For instance, as indicated in the third variation in FIG 11, a plurality of recessed parts 50 can be formed in the outer shroud 20 in the circumferential direction Dc. The number of the recessed parts 50 is not limited to two, and therefore, three or the more recessed parts 50 may be provided. Since it is possible to further lower the stiffness of the hook section 32 by thus increasing the number of the recessed parts 50, the stiffness of the hook section 32 cam be adjusted easily. The third variation discloses the hook section 32 having a plurality of recessed parts 50. Similarly, a plurality of recessed parts 60 also can be formed in the hook section 32.

### Fourth Variation

FIG. 12 is a perspective view of an outer shroud in a fourth variation of the first and second embodiments of the present invention. FIG. 12 shows only the outer shroud in a simplified form.

The outer shroud 20 of the vane segment 30 in each of the first and second embodiments has the recessed part 50 in a part of the rear hook 34 in the circumferential direction Dc. However, the construction of the recessed part 50 is not limited to that in the first and second embodiments. For instance, as indicated in the fourth variation in FIG. 12, the length of a recessed part 50 can be more than half of a length of the vane segment 30 in the circumferential direction Dc. In other words, the recessed part 50 can be formed in a major part of the vane segment 30 in the circumferential direction Dc. According to the construction above, it is possible to further lower the stiffness of the hook section 32, as in the case of the hook section 32 having a plurality of the recessed part 50 in one vane segment 30, while reducing the number of cutting processes etc. Thus, the stiffness of the hook section 32 can be adjusted easily. The fourth variation discloses the hook section 32 having the longer recessed part 50. Similarly, a longer recessed part 60 also can be formed in the hook section 32.

The present invention is not limited to the embodiments and the variations, but includes various changes to the above embodiments and variations.

For instance, the shape of the recessed part 50 is not limited to the shape described in the first embodiment as far as the shape is effective in reducing the stiffness of the hook section 32.

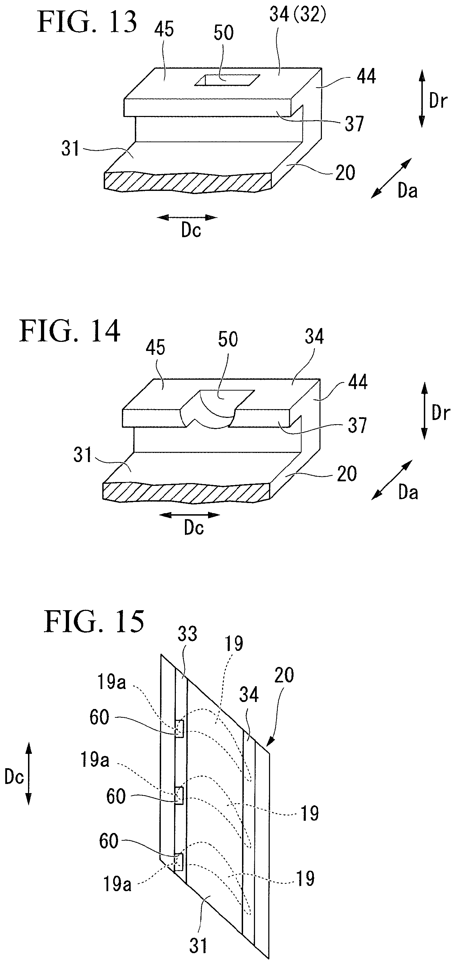

FIG. 13 is an expanded perspective view of an area around a rear hook in a fifth variation of the present disclosure. FIG. 14 is an expanded perspective view of a part around a rear hook in a sixth variation of the embodiments of the present invention.

In the first and second embodiments, the structure in which the recessed part 50 is formed in the rear hook 34 so as to be recessed from the upstream side to the downstream side in the axial direction Da has been described. However, the shape of the recessed part 50 is not limited to that in the embodiments. For instance, a recessed part 50 may be formed so as to be recessed in the radial direction Dr as in the fifth variation shown in FIG. 13. This variation does not form part of the present invention since it does not fall under the scope of the appended claims.

In the above embodiments, the recessed part 50 has the shape of an angular groove when seen in a cross-section perpendicular to the axial direction Da. However, the shape of the recessed part 50 is not limited to this shape, and other shapes which can reduce the stiffness of the hook section 32 can be adopted for the recessed part 50. For instance, as in the sixth variation indicated in FIG. 14, a recessed part 50 shaped as a round groove when seen in a cross-section perpendicular to the axial direction Da may also be formed.

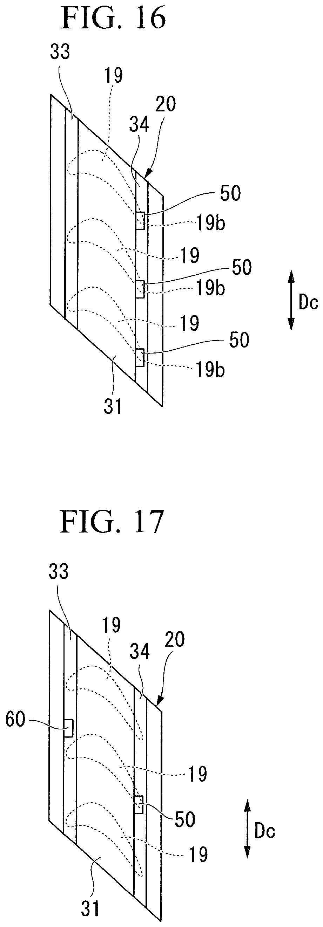

FIG. 15 is a view, from a radially outward side, of an outer shroud in a seventh variation of the embodiments of the present invention. FIG. 16 is a view, from a radially outward side, of an outer shroud in an eighth variation of the embodiments of the present invention. FIG. 17 is a view, from the radially outward side, of the outer shroud in the first embodiment of the present invention.

As shown in FIG. 17, in the first embodiment, an example has been described in which each of the recessed parts 50 and 60 is formed in the area including the center in the circumferential direction Dc of the hook section 32. However, the location of the recessed part is not limited to that in the above embodiments. For instance, as in the seventh variation in FIG. 15, a plurality of recessed parts 60 may be arranged so that each of the recessed parts 60 includes an area where a leading edge 19b of a vane body 19 is located when seen in the circumferential direction Dc. Similarly, as in the eighth variation in FIG. 16, a plurality of recessed parts 50 may be arranged so that each of the recessed parts 50 includes an area where a trailing edge 19b of a vane body 19 is located when seen in the circumferential direction Dc.

A connection area where the shroud body 31 is connected with the leading edge 19a of the vane body 19 and a connection area where the shroud body 31 is connected with the trailing edge 19b each undergoes a deformation of the vane body 19 in addition to a deformation of the shroud body 31. Heat stress in these connection areas thus tends to be high. It is possible to efficiently relax the heat stress in these highly-stressed areas by arranging the recessed part 50 in an area where the trailing edge 19b of the vane body 19 is located and arranging the recessed part 60 in an area where the leading edge 19a of a vane body 19 is located when seen in the circumferential direction Dc. In FIG. 15, only the recessed part 60 is provided, and in FIG. 16, only the recessed part 50 is provided. However, both of the recessed parts 50 and 60 can be provided in the hook sections.

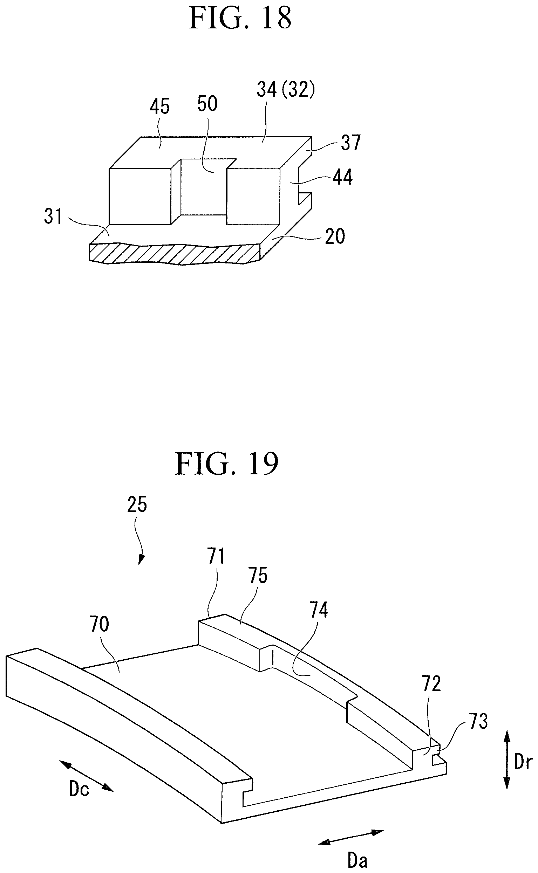

FIG. 18 is an expanded perspective view, corresponding to FIG. 13, of an area around a rear hook in a tenth variation of the embodiments of the present invention.

In the above embodiments, the structures in which the protrusion 37 in the rear hook 34 protrudes toward the upstream side in the axial direction Da have been described. However, the direction in which the protrusion 37 protrudes is not limited to the direction toward the upstream side in the axial direction Da. For instance, as in the tenth variation indicated in FIG. 18, a protrusion which protrudes to the downstream side in the axial direction Da can also be formed. The position of the recessed part 50 is not limited to the position on the upstream side of the rear hook 34 as in the example shown in FIG. 18.

In the second embodiment, the recessed part 60 is formed in the front hook 33 and the recessed part 50 is formed in the rear hook 34. However, for instance, a structure in which a recessed part 60 is formed in a front hook 33 and a recessed part 50 is not provided in a rear hook 34 is also conceivable.

FIG. 19 is a perspective view of a ring segment in an eleventh variation of the embodiments of the present invention.

In the first and second embodiments, the recessed parts 50 and 60 are formed in the outer shroud 20 of the vane 18. However, recessed parts 50 and 60 can also be employed in the ring segments 25.

As indicated in FIG. 19, the ring segment 25 has a ring segment body 70 and a hook section 71. The ring segment body 70 extends in an axial direction Da and a circumferential direction Dc (shown in FIG.2).

The hook section 71 has a radial protrusion 72 and an engaging part 73. The radial protrusion 72 is arranged on the outward side of the ring segment body 70 in a radial direction Dr. The radial protrusion 72 protrudes toward the outward side in the radial direction Dr and extends in the circumferential direction Dc. The engaging part 73 protrudes from the radial protrusion 72 toward the downstream side in the axial direction Da and extends in the circumferential direction Dc. The hook section 71 has a recessed part 74, recessed in the axial direction Da or the radial direction Dr, in at least a part of the hook section 71 in the circumferential direction Dc. FIG. 19 indicates an example in which the recessed part 74 is recessed in the axial direction Da. The engaging part 73 has a sealing surface 75 which contacts the insulation ring 24 (ring segment support member; shown in FIG. 2) in the radial direction Dr continuously over the entire engaging part 73 in the circumferential direction Dc.

In the ring segment 25 thus constructed, the recessed part 74 is capable of reducing the stiffness of the hook section 71 in the same manner as the outer shroud 20 in the embodiments. Therefore, the hook section 71 is capable of deforming following a deformation of the ring- segment body 70 due to heating. The recessed part 74 does not split the sealing surface 75 of the radial protrusion 72 in the circumferential direction Dc. Therefore, the sealing surface 75 can be formed continuously in the circumferential direction Dc. As a result, it is possible to limit an increase in the amount of air leakage and relax the heat stress acing on the ring segment body 70 so as to extend the lifetime of the ring segment 25. A variety of shapes and layouts may be adopted for the recessed part 74 of the ring segment 25 as with the recessed parts 50 in the vanes 18 in the above embodiments and variations.

### INDUSTRIAL APPLICABILITY

The present invention can be utilized for a vane, a gas turbine, a ring segment, a remodeling method for a vane, and a remodeling method for a ring segment. The present invention is capable of limiting an increase in the amount of air leakage and relaxing heat stress.

### REFERENCE SIGNS LIST

1: gas turbine
2: compressor
3: combustor
4: turbine section
6: casing
7: rotor
10: rotor body
11: blade stage
12: blade
13: blade body
14: platform
15: blade root
17: vane stage
18: vane
19: vane body (airfoil section)
19a: leading edge
20: outer shroud
20a: upstream-side peripheral end
20b: downstream-side peripheral end
21: inner shroud
23: blade ring
24: insulation ring (vane support member, ring segment support member)
25: ring segment
26: upstream-side end
27: transition piece
28: fuel supplier
29: outlet flange
30: vane segment
31: shroud body
32: hook section
33: front hook
34: rear hook
36: protrusion (engaging part)
36a: end face
37: protrusion (engaging part)
39: front engaging part (engaging part)
40: rear engaging part (engaging part)
41: supporting section
42: sealing surface
43: supporting section
44: hook body
45: sealing surface
50: recessed part
51: downstream-side face
52: radially inward-side face
53: circumferential faces
60: recessed part
60a: downstream-side part
60b: radially outward-side part
60c: upstream-side part
61: hook body
70: ring segment body
71: hook section
72: radial protrusion
73: engaging part
74: recessed part
75: sealing surface
Ar: rotor axis
Pg: combustion gas passage (high-temperature gas passage)
C1: central part

## Claims

1. A vane arrangement for a gas turbine comprising a vane (18), a casing and a support member (24), the vane (18) comprising an airfoil section (19) configured to extend, when in use in a mounting arrangement in a vane stage (17) in which plural vanes (18) are aligned in a circumferential direction (Dc) that is a direction of a circumference of a rotor axis (Ar) of a rotor, in a radial direction (Dr) with respect to the rotor axis (Ar), and an outer shroud (20) located on the radially outward side of the airfoil section (19) and supported inside the casing (6) by the vane support member (24), wherein the outer shroud (20) comprises:
a shroud body (31) which extends in an axial direction (Da), that is a direction parallel to the rotor axis (Ar), and the circumferential direction (Dc); and
a hook section (32) which has a radial protrusion (61;44) provided on the radially outward side of the shroud body (31) so as to protrude toward the radially outward side and so as to extend in the circumferential direction (Dc), and an engaging part protruding in the axial direction (Da) from the radial protrusion (61;44) and extending in the circumferential direction (Dc), wherein
the hook section (32) comprises a recessed part (50;60) recessed in the axial direction (Da) in at least a part of the circumference of the hook section (32),
the hook section (32) comprises a rear hook (34), arranged on the downstream side of the outer shroud in the axial direction (Da), the engaging part of which comprises a sealing surface (45) which contacts the vane support member (24) in the radial direction (Dr) along the circumference of the engaging part,
the rear hook (34) has a hook body (44) which rises toward the radially outward side and a protrusion (37) protruding toward the upstream side in the axial direction (Da), and a face directed toward the radially outward side of the hook body (44) and a face directed toward the radially outward side of the protrusion (37) form the unitary sealing surface (45) which continues in the circumferential direction (Dc) and which contacts a radially inward face (24a) of the vane support member (24) in the assembled state, wherein a rear engaging part (40) of the vane support member (24) that extends to the radially inward side of the protrusion (37) is engaged with the rear hook (34) and is located next to the upstream side of the rear hook (34) and has a supporting section (43) supporting the protrusion (37) from the radially inward side, wherein the recessed part (50) of the rear hook (34) is formed by removing part of the sealing surface (45) of the engaging part of the rear hook (34) so that the recessed part (50) extends from the upstream side of the protrusion (37) to the hook body (44) and is recessed to such an extent so as to not penetrate to the downstream side of the hook body (44) in the axial direction (Da), so that the sealing surface (45) is formed continuously in the circumferential direction (Dc) including a downstream part of the recessed part (50) in the axial direction (Da) and contacts the vane support member (24) in the radial direction (Dr) continuously along the entire circumference of the engaging part, and so that the sealing surface (45) is not split by the recessed part (50) in the circumferential direction (Dc).

2. The vane arrangement according to claim 1, wherein the hook section (32) comprises a front hook (33), arranged on the upstream side of the outer shroud in the axial direction (Da), the engaging part of which has the sealing surface (42) on the radially inward side.

3. The vane arrangement according to claim 2, wherein an area of the shroud body (31) in the circumferential direction (Dc), in which the recessed part (60) of the front hook (33) is arranged, includes a position in the circumferential direction (Dc) of the shroud body (31) at which a leading edge of the airfoil section (19) is arranged.

4. The vane arrangement according to any one of claims 1 to 3, wherein an area of the shroud body (31) in the circumferential direction (Dc), in which the recessed part (50) of the rear hook (34) is arranged, includes a position in the circumferential direction (Dc) of the shroud body (31) at which a trailing edge of the airfoil section (19) is arranged.

5. The vane arrangement according to claim 1 or 2, wherein an area of the shroud body (31) in the circumferential direction (Dc), in which the recessed part (50;60) is arranged, includes the center in the circumferential direction (Dc) of the hook section (32).

6. A remodeling method for a vane arrangement for a gas turbine, the vane arrangement comprising a vane (18), a vane support member (24) and a casing (6), wherein the vane (18) is supported in the casing (6) by the vane support member (24), the vane (18) comprising an airfoil section (19) configured to extend, when in use in a mounting arrangement in a vane stage (17) in which plural vanes (18) are aligned in a circumferential direction (Dc) that is a direction of a circumference of a rotor axis (Ar) of a rotor, in a radial direction (Dr) that is a direction radial to the rotor axis (Ar), and an outer shroud (20) arranged on the radially outward side of the airfoil section (19), the outer shroud (20) comprising:
a shroud body (31) which extends in an axial direction (Da), that is a direction parallel to the rotor axis (Ar), and the circumferential direction (Dc); and
a hook section (32) which has a radial protrusion (61;44) provided on the radially outward side of the shroud body (31) so as to protrude toward the radially outward side and so as to extend in the circumferential direction (Dc), and an engaging part protruding in the axial direction (Da) from the radial protrusion (61;44) and extending in the circumferential direction (Dc),
wherein the hook section (32) includes a rear hook (34), arranged on the downstream side of the outer shroud in the axial direction (Da),
the rear hook (34) has a hook body (44) which rises toward the radially outward side and a protrusion (37) protruding toward the upstream side in the axial direction (Da), and a face directed toward the radially outward side of the hook body (44) and a face directed toward the radially outward side of the protrusion (37) form the unitary sealing surface (45) which continues in the circumferential direction (Dc) and which contacts a radially inward face (24a) of the vane support member (24) in the assembled state where a rear engaging part (40) of the vane support member (24) that extends to the radially inward side of the protrusion (37) is engaged with the rear hook (34) and is located next to the upstream side of the rear hook (34)and has a supporting section (43) supporting the protrusion (37) from the radially inward side,
the remodeling method comprising a step of forming a recessed part (50) of the rear hook (34) recessed in the axial direction (Da) in at least a part of the rear hook (34) in the circumferential direction (Dc) by removing part of a sealing surface (45) of the rear hook (34) so that the recessed part (50) extends from the upstream side of the protrusion (37) to the hook body (44) and is recessed to such an extent so as to not penetrate to the downstream side of the hook body (44) in the axial direction (Da), so that the sealing surface (45) is formed continuously in the circumferential direction (Dc) including a downstream part of the recessed part (50) in the axial direction (Da) and contacts the vane support member (24) in the radial direction (Dr) continuously along the entire circumference of the engaging part, and so that the sealing surface (45) is not split by the recessed part (50) in the circumferential direction (Dc).

## Patentansprüche

1. Eine Leitschaufelanordnung für eine Gasturbine, die eine Leitschaufel (18), ein Gehäuse und ein Trägerelement (24) umfasst, wobei die Leitschaufel (18) einen Strömungsprofilabschnitt (19) umfasst, der konfiguriert ist, um sich, im Einsatz in einer Montageanordnung in einer Leitschaufelstufe (17), in der mehrere Leitschaufeln (18) in einer Umfangsrichtung (Dc), die eine Richtung eines Umfangs einer Rotorachse (Ar) eines Rotors ist, ausgerichtet sind, in einer radialen Richtung (Dr) in Bezug auf die Rotorachse (Ar) zu erstrecken, und eine äußere Abdeckung (20), die an der radial äußeren Seite des Strömungsprofilabschnitts (19) angeordnet ist und im Inneren des Gehäuses (6) durch das Leitschaufelträgerelement (24) getragen wird, wobei die äußere Abdeckung (20) umfasst:
einen Abdeckungskörper (31), der sich in einer axialen Richtung (Da), die eine Richtung parallel zu der Rotorachse (Ar) ist, und in der Umfangsrichtung (Dc) erstreckt, und
einen Hakenabschnitt (32), der einen radialen Vorsprung (61;44) aufweist, der an der radial äußeren Seite des Abdeckungskörpers (31) so vorgesehen ist, dass er zu der radial äußeren Seite vorsteht, und so, dass er sich in der Umfangsrichtung (Dc) erstreckt, und einen Eingriffsteil, der in der axialen Richtung (Da) von dem radialen Vorsprung (61;44) vorsteht und sich in der Umfangsrichtung (Dc) erstreckt, wobei
der Hakenabschnitt (32) einen vertieften Teil (50;60) aufweist, der in der axialen Richtung (Da) in mindestens einem Teil des Umfangs des Hakenabschnitts (32) vertieft ist,
der Hakenabschnitt (32) einen hinteren Haken (34) umfasst, der auf der stromabwärts gelegenen Seite der äußeren Abdeckung in der axialen Richtung (Da) angeordnet ist, dessen Eingriffsteil eine Dichtungsoberfläche (45) umfasst, die das Leitschaufelträgerelement (24) in der radialen Richtung (Dr) entlang dem Umfang des Eingriffsteils berührt,
der hintere Haken (34) einen Hakenkörper (44) aufweist, der sich zur radial äußeren Seite hin erhebt, und einen Vorsprung (37), der zu der stromaufwärtigen Seite hin in der axialen Richtung (Da) vorsteht, und eine zu der radial äußeren Seite des Hakenkörpers (44) gerichtete Fläche und eine zu der radial äußeren Seite des Vorsprungs (37) gerichtete Fläche die einheitliche Dichtungsoberfläche (45) bilden, die sich in der Umfangsrichtung (Dc) fortsetzt und die im montierten Zustand eine radial innere Fläche (24a) des Leitschaufelträgerelements (24) berührt, wobei ein hinterer Eingriffsteil (40) des Leitschaufelträgerelements (24), der sich zu der radial inneren Seite des Vorsprungs (37) erstreckt, mit dem hinteren Haken (34) in Eingriff ist und neben der stromaufwärtigen Seite des hinteren Hakens (34) angeordnet ist und einen Trägerabschnitt (43) aufweist, der den Vorsprung (37) von der radial inneren Seite trägt, wobei der vertiefte Teil (50) des hinteren Hakens (34) durch Entfernen eines Teils der Dichtungsoberfläche (45) des Eingriffsteils des hinteren Hakens (34) gebildet ist, so dass sich der vertiefte Teil (50) von der stromaufwärtigen Seite des Vorsprungs (37) zu dem Hakenkörper (44) erstreckt und in einem solchen Ausmaß vertieft ist, dass er nicht zu der stromabwärtigen Seite des Hakenkörpers (44) in der axialen Richtung (Da) durchdringt, so dass die Dichtungsoberfläche (45) kontinuierlich in der Umfangsrichtung (Dc) einschließlich eines stromabwärtigen Teils des vertieften Teils (50) in der axialen Richtung (Da) ausgebildet ist und das Leitschaufelträgerelement (24) in der radialen Richtung (Dr) kontinuierlich entlang des gesamten Umfangs des Eingriffsteils berührt, und so, dass die Dichtungsfläche (45) nicht durch den vertieften Teil (50) in der Umfangsrichtung (Dc) geteilt ist.

2. Die Schaufelanordnung nach Anspruch 1, wobei der Hakenabschnitt (32) einen auf der in axialer Richtung (Da) stromaufwärts der äußeren Abdeckung angeordneten vorderen Haken (33) umfasst, dessen Eingriffsteil die Dichtungsoberfläche (42) auf der radial einwärts gerichteten Seite aufweist.

3. Die Schaufelanordnung nach Anspruch 2, wobei ein Bereich des Abdeckungskörpers (31) in der Umfangsrichtung (Dc), in dem der vertiefte Teil (60) des vorderen Hakens (33) angeordnet ist, eine Position in der Umfangsrichtung (Dc) des Abdeckungskörpers (31) einschließt, an der eine Vorderkante des Strömungsprofilabschnitts (19) angeordnet ist.

4. Die Schaufelanordnung nach einem der Ansprüche 1 bis 3, wobei ein Bereich des Abdeckungskörpers (31) in der Umfangsrichtung (Dc), in dem der vertiefte Teil (50) des hinteren Hakens (34) angeordnet ist, eine Position in der Umfangsrichtung (Dc) des Abdeckungskörpers (31) einschließt, an der eine Hinterkante des Strömungsprofilabschnitts (19) angeordnet ist.

5. Die Schaufelanordnung nach Anspruch 1 oder 2, wobei ein Bereich des Abdeckungskörpers (31) in der Umfangsrichtung (Dc), in dem der vertiefte Teil (50;60) angeordnet ist, die Mitte in der Umfangsrichtung (Dc) des Hakenabschnitts (32) einschließt.

6. Ein Umgestaltungsverfahren für eine Leitschaufelanordnung für eine Gasturbine, wobei die Leitschaufelanordnung eine Leitschaufel (18), ein Leitschaufelträgerelement (24) und ein Gehäuse (6) umfasst, wobei die Leitschaufel (18) in dem Gehäuse (6) durch das Leitschaufelträgerelement (24) getragen wird, wobei die Leitschaufel (18) einen Strömungsprofilabschnitt (19) umfasst, der konfiguriert ist, um sich, im Einsatz in einer Montageanordnung in einer Leitschaufelstufe (17), in der mehrere Leitschaufeln (18) in einer Umfangsrichtung (Dc) ausgerichtet sind, die eine Richtung eines Umfangs einer Rotorachse (Ar) eines Rotors ist, in einer radialen Richtung (Dr) zu erstrecken, die eine Richtung radial zu der Rotorachse (Ar) ist, und eine äußere Abdeckung (20), die an der radial äußeren Seite des Strömungsprofilabschnitts (19) angeordnet ist, wobei die äußere Abdeckung (20) umfasst:
einen Abdeckungskörper (31), der sich in einer axialen Richtung (Da), die eine Richtung parallel zu der Rotorachse (Ar) ist, und in der Umfangsrichtung (Dc) erstreckt, und
einen Hakenabschnitt (32), der einen radialen Vorsprung (61;44) aufweist, der an der radial äußeren Seite des Abdeckungskörpers (31) so vorgesehen ist, dass er zu der radial äußeren Seite vorsteht, und so, dass er sich in der Umfangsrichtung (Dc) erstreckt, und einen Eingriffsteil, der in der axialen Richtung (Da) von dem radialen Vorsprung (61;44) vorsteht und sich in der Umfangsrichtung (Dc) erstreckt,
wobei der Hakenabschnitt (32) einen auf der stromabwärtigen Seite der äußeren Abdeckung in der axialen Richtung (Da) angeordneten hinteren Haken (34) aufweist, der hintere Haken (34) einen sich zu der radial äußeren Seite hin erhebenden Hakenkörper (44) und einen zu der stromaufwärtigen Seite hin in der axialen Richtung (Da) vorspringenden Vorsprung (37) aufweist, und eine zu der radial äußeren Seite des Hakenkörpers (44) gerichtete Fläche und eine zu der radial äußeren Seite des Vorsprungs (37) gerichtete Fläche die einheitliche Dichtungsoberfläche (45) bilden, die sich in der Umfangsrichtung (Dc) fortsetzt und die im montierten Zustand, in dem ein hinterer Eingriffsteil (24a) des Leitschaufelträgerelements (24) mit der radial inneren Fläche (24a) des Leitschaufelträgerelements (24) in Kontakt steht, die einheitliche Dichtungsoberfläche (45) bildet, die sich in der Umfangsrichtung (Dc) fortsetzt und die eine radial nach innen gerichtete Fläche (24a) des Leitschaufelträgerelements (24) im montierten Zustand berührt, wobei ein hinterer Eingriffsteil (40) des Leitschaufelträgerelements (24), der sich zu der radial nach innen gerichteten Seite des Vorsprungs (37) erstreckt, mit dem hinteren Haken (34) in Eingriff steht und neben der stromaufwärtigen Seite des hinteren Hakens (34) angeordnet ist und einen Trägerabschnitt (43) aufweist, der den Vorsprung (37) von der radial nach innen gerichteten Seite trägt,
wobei das Umgestaltungsverfahren einen Schritt des Ausbildens eines vertieften Teils (50) des hinteren Hakens (34) umfasst, der in der axialen Richtung (Da) in mindestens einem Teil des hinteren Hakens (34) in der Umfangsrichtung (Dc) vertieft ist, indem ein Teil einer Dichtungsoberfläche (45) des hinteren Hakens (34) so entfernt wird, dass sich der vertiefte Teil (50) von der stromaufwärtigen Seite des Vorsprungs (37) zu dem Hakenkörper (44) erstreckt und so weit vertieft ist, dass er in der axialen Richtung (Da) nicht zu der stromabwärtigen Seite des Hakenkörpers (44) durchdringt, so dass die Dichtungsoberfläche (45) kontinuierlich in der Umfangsrichtung (Dc) einschließlich eines stromabwärtigen Teils des vertieften Teils (50) in der axialen Richtung (Da) ausgebildet ist und das Leitschaufelträgerelement (24) in der radialen Richtung (Dr) kontinuierlich entlang des gesamten Umfangs des Eingriffsteils berührt, und so, dass die Dichtungsoberfläche (45) nicht durch den vertieften Teil (50) in der Umfangsrichtung (Dc) geteilt ist.

## Revendications

1. Aubage d'une turbine à gaz, comprenant une aube (18), une enveloppe et un élément (24) de support, l'aube (18) comprenant une partie (19) d'aile aérodynamique, configurée pour s'étendre, lorsqu'elle est en utilisation dans un agencement de montage dans un étage (17) d'aubes, dans lequel plusieurs aubes (18) sont alignées dans une direction (Dc) circonférentielle, qui est une direction d'une circonférence d'un axe (Ar) d'un rotor, dans une direction (Dr) radiale par rapport à l'axe (Ar) du rotor, et une virole (20) extérieure disposée du côté vers l'extérieur radialement de la partie (19) d'aile aérodynamique et supportée à l'intérieur de l'enveloppe (6) par l'élément (24) de support d'aube,
dans lequel la virole (20) extérieure comprend :
un corps (31) de virole, qui s'étend dans une direction (Da) axiale, qui est une direction parallèle à l'axe (Ar) du rotor, et dans la direction (Dc) circonférentielle ; et
une partie (32) de crochet, qui a une saillie (61 ; 44) radiale prévue du côté vers l'extérieur radialement du corps (31) de la virole, de manière à faire saillie vers le côté vers l'extérieur radialement et de manière à s'étendre dans la direction (Dc) circonférentielle et une partie d'enclenchement faisant saillie dans la direction (Da) axiale à partir de la saillie (61 ; 44) radiale et s'étendant dans la direction (Dc) circonférentielle, dans lequel
la partie (32) de crochet comprend une partie (50 ; 60) en retrait dans la direction (Da) axiale, dans au moins une partie de la circonférence de la partie (32) de crochet,
la partie (32) de crochet comprenant un crochet (34) arrière, disposé du côté en aval de la virole extérieure, dans la direction (Da) axiale,
dont la partie d'enclenchement comprend une surface (45) d'étanchéité, qui est en contact avec l'élément (24) de support de l'aube, dans la direction (Dr) radiale, le long de la circonférence de la partie d'enclenchement,
le crochet (34) arrière a un corps (44) de crochet, qui s'élève vers le côté vers l'extérieur radialement et une saillie (37) faisant saillie vers le côté en amont dans la direction (Da) axiale, et une face dirigée vers le côté vers l'extérieur radialement du corps (44) du crochet et une face dirigée vers le côté extérieur radialement de la saillie (37) forment la surface (45) unitaire d'étanchéité, qui se continue dans la direction (Dc) circonférentielle et qui est en contact avec une face (24a) vers l'intérieur radialement de l'élément (24) de support de l'aube dans l'état assemblé, dans lequel
une partie (40) arrière d'enclenchement de l'élément (24) de support de l'aube, qui s'étend vers le côté vers l'intérieur radialement de la saillie (37), est enclenchée avec le crochet (34) arrière et est placée près du côté en amont du crochet (34) arrière et a une partie (43) de support supportant la saillie (37) à partir du côté vers l'intérieur radialement,
dans lequel la partie (50) en retrait du crochet (34) arrière est formée en enlevant une partie de la surface (45) d'étanchéité de la partie d'enclenchement du crochet (34) arrière, de manière à ce que la partie (50) en retrait s'étende du côté en amont de la saillie (37) au corps (44) du crochet et soit en retrait dans une mesure telle qu'elle ne pénètre pas dans le côté en aval du corps (44) du crochet dans la direction (Da) axiale, de manière à ce que la surface (45) d'étanchéité soit formée continuellement dans la direction (Dc) circonférentielle en incluant une partie en aval de la partie (50) en retrait dans la direction (Da) axiale et soit en contact avec l'élément (24) de support de l'aube dans la direction (Dr) radiale continuellement, le long de toute la circonférence de la partie d'enclenchement, et de manière à ce que la surface (45) d'étanchéité ne soit pas séparée par la partie (50) en retrait dans la direction (Dc) circonférentielle.

2. Aubage suivant la revendication 1, dans lequel la partie (32) de crochet comprend un crochet (33) avant, disposé du côté en amont de la virole extérieure, dans la direction (Da) axiale, dont la partie d'enclenchement a la surface (42) d'étanchéité du côté vers l'intérieur radialement.

3. Aubage suivant la revendication 2, dans lequel une zone du corps (31) de la virole, dans la direction (Dc) circonférentielle, dans laquelle la partie (60) en retrait du crochet (33) avant est disposée, comprend une position dans la direction (Dc) circonférentielle du corps (31) de la virole où un bord d'attaque de la partie (19) d'aile aérodynamique est disposé.

4. Aubage suivant l'une quelconque des revendications 1 à 3, dans lequel une zone du corps (31) de la virole dans la direction (Dc) circonférentielle, dans laquelle la partie (50) en retrait du crochet (34) arrière est disposée, comprend une position dans la direction (Dc) circonférentielle du corps (31) de la virole où un bord de fuite de la partie (19) d'aile aérodynamique est disposé.

5. Aubage suivant la revendication 1 ou 2, dans lequel une zone du corps (31) de la virole dans la direction (Dc) circonférentielle, dans laquelle la partie (50 ; 60) en retrait est disposée, comprend le centre dans la direction (Dc) circonférentielle de la partie (32) de crochet.

6. Procédé de remodelage d'un aubage d'une turbine à gaz, l'aubage comprenant une aube (18), un élément (24) de support d'aube et une enveloppe (6), dans lequel l'aube (18) est supportée dans l'enveloppe (6) par l'élément (24) de support, l'aube (18) comprenant :
une partie (19) d'aile aérodynamique configurée pour s'étendre, lorsqu'elle est en utilisation dans un agencement de montage dans un étage (17) d'aubes, dans lequel plusieurs aubes (18) sont alignées dans une direction (Dc) circonférentielle, qui est une direction d'une circonférence d'un axe (Ar) d'un rotor, dans une direction (Dr) radiale par rapport à l'axe (Ar) du rotor, et une virole (20) extérieure disposée du côté vers l'extérieur radialement de la partie (19) d'aile aérodynamique,
la virole (20) extérieure comprenant :
un corps (31) de virole, qui s'étend dans une direction (Da) axiale, qui est une direction parallèle à l'axe (Ar) du rotor, et dans la direction (Dc) circonférentielle ; et
une partie (32) de crochet, qui a une saillie (61 ; 44) radiale prévue du côté vers l'extérieur radialement du corps (31) de la virole, de manière à faire saillie vers le côté vers l'extérieur radialement et de manière à s'étendre dans la direction (Dc) circonférentielle, et une partie d'enclenchement faisant saillie dans la direction (Da) axiale à partir de la saillie (61 ; 44) radiale et s'étendant dans la direction (Dc) circonférentielle,
dans lequel la partie (32) de crochet a un crochet (34) arrière disposé du côté en aval de la virole extérieure, dans la direction (Da) axiale,
le crochet (34) arrière a un corps (44) de crochet, qui s'élève vers le côté vers l'extérieur radialement et une saillie (37) faisant saillie vers le côté en amont dans la direction (Da) axiale, et une face dirigée vers le côté vers l'extérieur radialement du corps (44) du crochet et une face dirigée vers le côté vers l'extérieur radialement de la saillie (37) forment la surface (45) unitaire d'étanchéité, qui se continue dans la direction (Dc) circonférentielle et qui est en contact avec une face (24a) vers l'intérieur radialement de l'élément (24) de support de l'aube dans l'état assemblé où une partie (40) arrière d'enclenchement de l'élément (24) de support de l'aube, qui s'étend vers le côté vers l'intérieur radialement de la saillie (37), est enclenchée avec le crochet (34) arrière et est disposée près du côté en amont du crochet (34) arrière et a une partie (43) de support supportant la saillie (37) à partir du côté vers l'intérieur radialement,
le procédé de remodelage comprenant un stade de formation d'une partie (50) en retrait du crochet (34) arrière en retrait dans la direction (Da) axiale dans au moins une partie du crochet (34) arrière dans la direction (Dc) circonférentielle en enlevant une partie de la surface (45) d'étanchéité du crochet (34) arrière, de manière à ce que la partie (50) en retrait s'étende du côté en amont de la saillie (37) au corps (44) du crochet et soit en retrait dans une mesure telle qu'elle ne pénètre pas dans le côté en amont du corps (44) du crochet dans la direction (Da) axiale, de manière à ce que la surface (45) d'étanchéité soit formée continuellement dans la direction (Dc) circonférentielle, comprenant une partie en aval de la partie (50) en retrait dans la direction (Da) axiale et soit en contact avec l'élément (24) de support de l'aube dans la direction (Dr) radiale continuellement, le long de toute la circonférence de la partie d'enclenchement et de manière à ce que la surface (45) d'étanchéité ne soit pas séparée par la partie (50) en retrait dans la direction (Dc) circonférentielle.
